Europäisches Patentamt

European Patent Office

Office européen des brevets

(19)

(11) Publication number: **0 262 544**
**B1**

(12)

# EUROPEAN PATENT SPECIFICATION

(45) Date of publication of the patent specification:
25.10.89

(51) Int. Cl.⁴: **F16F 13/00, B60K 5/12**

(21) Application number: **87113768.3**

(22) Date of filing: **24.01.84**

(60) Publication number of the earlier application in accordance with Art. 76 EPC: **0115417**

(54) **Hydraulically damped mounting device.**

(30) Priority: **25.01.83 GB 8301964**
**12.05.83 GB 8313111**

(43) Date of publication of application:
**06.04.88 Bulletin 88/14**

(45) Publication of the grant of the patent:
**25.10.89 Bulletin 89/43**

(84) Designated Contracting States:
**DE FR GB SE**

(56) References cited:
EP-A- 0 042 910
EP-A- 0 110 195
DE-C- 3 245 653
GB-A- 1 253 686
GB-A- 2 086 530

PATENT ABSTRACTS OF JAPAN, vol. 5,
no. 170 (M-94)[842], 29th October 1981; &
JP-A-56 94 043 (TOYODA GOSEI K.K.) 30-07-1981 (Cat.
D)
PATENT ABSTRACTS OF JAPAN, vol. 6,
no. 240 (M-174)[1118], 27th November 1982; &
JP-A-57 138 424 (NISSAN JIDOSHA K.K.) 26-08-1982

(73) Proprietor: **AVON INDUSTRIAL POLYMERS LIMITED,**
**Bath Road, Melksham Wiltshire SN12 8AA(GB)**

(72) Inventor: **West, John Philip, 32 Mill Road, Worton**
**Devizes Wiltshire(GB)**

(74) Representative: **Calderbank, Thomas Roger et al,**
**MEWBURN ELLIS & CO. 2/3 Cursitor Street, London**
**EC4A 1BQ(GB)**

ACTORUM AG

## Description

The present invention relates to hydraulically damped mounting devices.

In a structure where it is desired to prevent the vibration of a piece of machinery (reciprocating engine for example) being transmitted to another part, it is common to provide an isolator (or mounting) between the two parts of the structure, the isolator being a combined spring and damper. The present invention is concerned with a mounting device where the damping is achieved at least partially hydraulically. It finds applications, for example, in mounting an engine in a vehicle. In general such mountings have to function under different types of vibrations, which may vary both in frequency and amplitude. In general, small amplitude vibrations have a high frequency and large amplitude vibrations have a low frequency, but this is not always the case due to e.g. resonances in the system. The resonances may arise both from the structure itself and from properties of the mounting device.

Conventional mountings usually have an all-elastomeric construction to provide a compromise between the requirement of high damping to control and limit large amplitudes at predominantly low frequency and the requirement at low damping to reduce the forces transmitted at small amplitude and high frequency. The present invention overcomes the need to compromise by providing two stage damping, i.e. to achieve a large degree of damping for high amplitude vibration but negligible damping at low amplitudes.

In GB-A 811748 a mounting was proposed which attempted to achieve this aim. It consisted of a first anchor point to be attached to one part of the structure, a second anchor point to be attached to another part of the structure, and a deformable wall in the form of a resilient spring element connecting together the fixing points. A surface of a flexible partition rigidly associated with the first anchor point defined, together with the spring element, a working chamber containing liquid. The working chamber communicated, via an aperture in the flexible partition with a compensation chamber or reservoir. The compensation chamber was bounded by a second deformable wall in the form of a bellows so that the volume of the compensation chamber was determined by the liquid pressure in it, which in turn was determined by the volume of the working chamber. Vibrations of one part of the structure relative to the other caused the anchor points to vibrate relative to each other and this caused flexing of the spring element thereby changing the volume of the working chamber. For small amplitude vibrations, flexing of the diaphragm absorbed the movement of hydraulic fluid caused by the change in the volume of the working chamber. For high amplitude oscillation, however, this movement was was insufficient to take up all the volume change and hydraulic fluid moved between the working chamber and the compensation chamber through the aperture, the compensation chamber expanding or contracting by deformation of the second deformable wall to compensate for the movement of fluid. The fact that part of the second deformable wall was free to move is important to ensure that the compensation chamber acts as such. The volume of the compensation chamber must be variable in such a way as to respond to changes of pressure within the compensation chamber. Thus, the structure damped large oscillations but left small oscillations relatively undamped.

Numerous attempts have been made to improve the mounting of GB-A-811748. It is known from EP-A-0027751 and EP-A-0040290 to form the partition as a flexible membrane in a rigid support fixed to the first anchor point. Instead of an aperture in the flexible membrane, a long passage of small cross section but of significant volume is provided in the rigid support connecting the working and compensation chambers. The flexible membrane is to absorb low amplitude vibrations, namely those whose amplitude is not great enough to disturb the column of liquid in the long passage. Both European publications are concerned with detailed proposals for the construction or dimensions of the passage with a view to controlling the response of the assembly to high amplitude vibrations.

Neither of these publications, nor GB-A-2068079 (which also presents the idea of a differentiated response to high amplitude vibrations on the one hand and low amplitude vibrations on the other, but in a different type of mounting device) has any concept of a specifically frequency-responsive device.

The present invention seeks to provide a device which has the capacity for the isolation of high frequency as well as low frequency vibrations, independent of their amplitude. Furthermore it permits, at least in some embodiments, "tuning" of the response of the device to the expected behaviour of the vehicle or other structure into which it is to be incorporated.

It has been appreciated by the inventor of the present invention that the main factor controlling the low frequency response is the resistance to movement of liquid in the passage between the working chamber and the compensation chamber. EP-A-0027751 and EP-A-0040290 attempt to control the low frequency response by suitable design of the passage, but can never achieve isolation of this response because there must always be some transmission of vibration from the working chamber to the compensation chamber via the flexible membrane. To isolate the low frequency response it is necessary for the only pressure transmission between the chambers to be via the passage and this would entail a rigid partition. The low frequency response, by which is meant the response between about 5 and 20 Hz, may then be controlled by suitable selection of the parameters of the passage. However, the use of a rigid partition would eliminate the method used in the prior art for controlling the high frequency response.

It is known, from JP-A-56-94043 and JP-A-57-138422 to provide a gas chamber separated from the liquid in the working chamber by a flexible diaphragm. Pressure changes in the liquid in the working chamber are transmitted to the gas, and since the gas is compressible and so accomodates volume changes more rapidly than the liquid, this gas chamber will influence the high frequency response of the mount. In JP-A-56-94043 the diaphragm is positioned on one of the anchor points but it has been found that this is unsuitable, because anchor points of sufficient rigidity to carry satisfactory loads severely restrict the size and construction of the diaphragm. The present invention therefore requires that the diaphragm be mounted on the (rigid) partition. This feature, however, is shown in one of the mount constructions discussed in JP-A-57-138422. Thus this document corresponds to the pre-characterising part of claim 1 and discloses a hydraulically damped mounting device having two anchor points connected by a first deformable wall; a working chamber enclosed between the first deformable wall and a rigid partition rigidly associated with a first one of the anchor points, the working chamber containing liquid; a compensation chamber for the liquid, the compensation chamber being at least partially bounded by a second deformable wall, a part of which is freely movable in dependence upon liquid pressure changes in the compensation chamber; a passage between the chambers to allow fluid communication of the liquid between them; and a flexible diaphragm on the partition in direct contact with the liquid in the working chamber, the flexible diaphragm acting as a barrier between the liquid and the gas chamber.

The mount design of JP-A-57-138422 is unsatisfactory, however, in that the construction adopted requires the use of a very stiff diaphragm, which reduces the "gas spring" effect of the gas in the gas pocket.

If the gas pocket is completely closed, thermal expansion or contraction of the gas pocket will cause the diaphragm to be biased from its normal position, which would have a detrimental effect on the behaviour of the mounting device. Changes of temperature are likely to occur if the mounting device is used to mount the engine of a motor vehicle, and hence it is desirable to provide some means of temperature compensation. A bleed orifice leading from the gas pocket may provide such compensation. The effective aperture of the bleed orifice is sufficiently small for the gas pocket to act as a closed pocket under high frequency changes, but to permit thermal equalisation of the pressure inside the gas pocket. Changes in pressure due to thermal effects occur much more slowly than the vibrations which affect the mounting device when in normal use.

By suitable choice of the effective aperture of the bleed orifice, the characteristics of the mounting device may be "tuned" to give a desired frequency response. A development of this is to make the effective aperture adjustable in response to e.g. engine frequency, to provide a mounting device with a variable frequency response.

Therefore according to the present invention the gas pocket has a bleed orifice having a means for controlling gas flow in the bleed orifice in dependence on a signal applied to the control means, the signal being dependent on the frequency of the vibrations to be damped.

An additional way of compensating for pressure changes in the gas pocket is to make the volume of the gas pocket controllable.

In the prior art constructions described previously, at least part of the deformable wall joining the two anchor points is a resilient spring. However, it is possible to achieve the advantages of the present invention in an arrangement in which the resilient spring forms the or a part of the deformable wall of the compensation chamber, and the other deformable wall is a flexible bellows. This arrangement has the advantage that the resistance to movement of the anchor points is determined primarily by the gas pocket and the movement of liquid through the passage linking the working and compensation chambers. This gives a particularly favourable high frequency response.

Embodiments of the invention will now be described, by way of example, with reference to the accompanying drawings, in which:

Figure 1 shows a hydraulically damped mounting device useful in understanding the present invention;

Figure 2 shows a second hydraulically damped mounting device useful in understanding the present invention;

Figure 3 shows a hydraulically damped mounting device being an embodiment of the present invention;

Figure 4 shows another hydraulically damped mounting device useful in understanding the present invention.

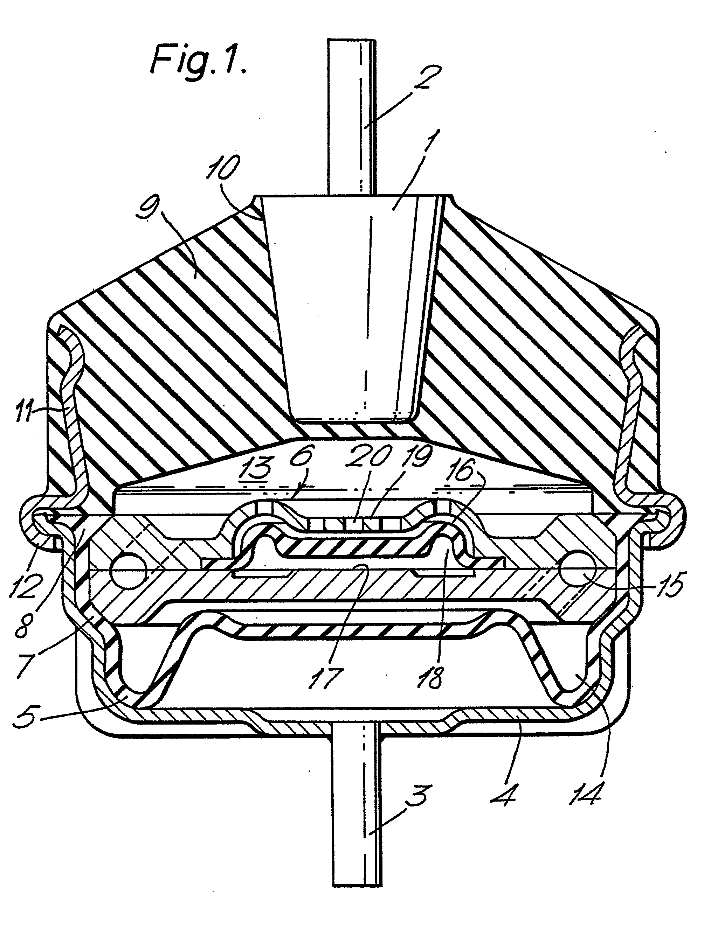

Referring first to Figure 1 a hydraulically damped mounting device has a boss 1 connected via a fixing bolt 2 to one of the parts of the structure. The other part of the structure is connected to a bolt 3 fixed on a generally U-shaped cup 4. Inside the cup 4 is a deformable wall formed by a flexible bellows 5 which receives adjacent the rim of the cup 4 a rigid partition 6. To hold this partition 6 in place the cup 4, and hence the bellows 5, have a step 7 which extends partially underneath the partition 6. The bellows 5 also has a splayed portion 8 adjacent the rim of the cup 4 which overlaps that rim and the partition 6. This splayed portion 8 abuts against an annular surface of a resilient spring 9 made of e.g. rubber which extends from that annular surface over the partition and which has a recess 10 which receives the boss 1. An annular bracket 11 extends into the resilient spring 9 and has a part 12 extending over the rim of the cup 4 thereby securing the resilient spring 9 to the cup 4. This also has the effect of forcing the resilient spring 9 against the splayed portion 8 of the bellows thereby pressing that splayed portion against the partition 6.

Thus, a working chamber 13 is formed between the resilient spring 9 and the partition 6, and a compensation chamber or reservoir 14 is formed between the partition and the bellows 5. The working chamber 13 and the reservoir 14 are filled with hydraulic fluid. The partition has a passage 15 extending through it communicating at one end with the working chamber 13 and at the other with the reservoir 14. As shown in the Figure the passage 15 is long and extends around the circumference of the partition 6.

A diaphragm 16 made of e.g. rubber like material extends over a portion of surface 17 of the partition 6 in the chamber 13 and has gas, such as air, in the space 18 between it and the surface 17 of the partition 6. A cover 19 having apertures 20 therein extends in the chamber 13 over the diaphragm 16. As shown in Figure 1, the partition 6 is formed into two parts with the cover 19 being integral with the upper part.

Thus, when oscillations are transmitted from the structure to the boss 1 via the bolt 2, the boss 1 moves towards or away from the partition 6. The spring element flexes and reduces (increases) the volume of the working chamber. At high frequencies, the inertia of the liquid in the passage 15 prevents the vibration being transmitted to the reservoir 14 and the pressure increase (or decrease) in the working chamber is transmitted to the diaphragm 16 via the apertures 20. The diaphragm 16 is forced towards (away from) the surface 17 of the partition, compressing (expanding) the air or other gas in the pocket 18 formed between the diaphragm 16 and the surface 17.

The gas pressure in the pocket 18 and the resistance to movement of the diaphragm 16 itself acts as a gas spring being activated by the oscillations. Due to the compression (expansion) of the air, the damping effect is applied to the vibrations, which increases with increasing amplitude oscillations. There is a limit to this. To prevent damage to the diaphragm 16, it is important that it is constrained from vibrating with too great an amplitude, and this is achieved by the limiting effect of surface 17 and cover 20.

At low frequencies the liquid moves more freely through the passage 15 and the damping effect is controlled by the length and dimensions of the passage and by the viscosity of the liquid. By selection of these parameters, the device can be designed to suit the particular application envisaged.

The diaphragm arrangement of Fig. 1 gives a closed gas pocket. However, a problem with such a pocket is that changes of the pressure in the pocket due to external effects such as heating of the device will cause a change in the characteristics of the mounting device. To overcome this problem it is necessary for the pressure of the gas in the pocket 18 to be adjustable and this may be achieved by providing a bleed orifice leading from the pocket 18.

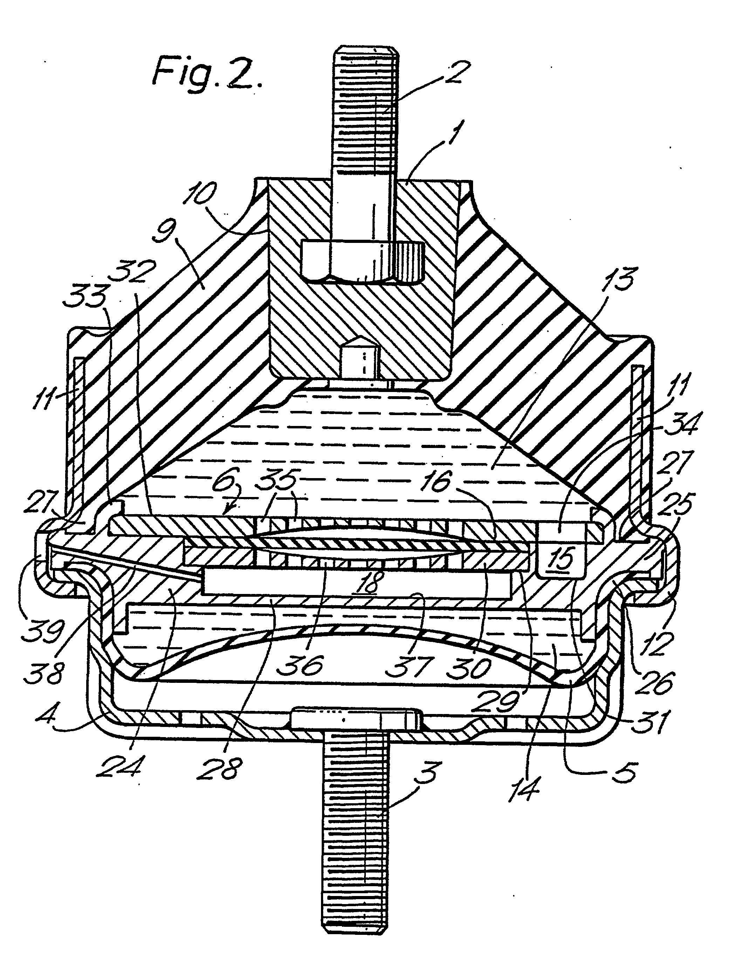

In the arrangement of Fig. 2 a bleed orifice leads from the pocket 18 to the ambient atmosphere. Parts of this mounting device similar to those of the mounting device shown in Figure 1 are indicated by the same reference numerals and will not be described further.

The partition 6 comprises a plate 24 which provides a rigid barrier between working chamber 13 and reservoir 14 and has a flange 25 at its outer periphery which is received between portions 26 and 27 of bellows and resilient spring respectively. The flange 25 and the splayed portions 26 and 27 are held together by part 12 of the annular bracket 11 which extends over the rim of cup 4.

The upper surface of the plate 24 has a central recess 28 formed in it which has a step 29 in its radially outer edge, which step 29 acts as a shoulder for receiving a lower perforated plate 30. The perforated plate 30 has a depression at its cental portion and the diaphragm 16 rests on the thicker portions at the radially outer edge of the plate to be supported clear of the central part of the perforated plate 30. Thus a gas pocket 18 is formed bounded by the recess 28 and the diaphragm 16. A recess in the form of a part-annular channel 31 is formed in the plate 24 radially outwardly of the central recess 26. It is this part-annular channel 31 which forms the passage 15 between the chamber 13 and the reservoir 14.

An upper perforated plate 32 is secured on top of the lower plate 24, by lip 33, over the diaphragm 16. Part of the upper plate 32 extends over the channel 31 to form the top of the passage 15. An aperture 34 in the upper plate and a corresponding aperture (not shown) in the lower plate permit liquid to enter the passage 15. The lower surface of the upper plate 32 has a depression therein, and the peripheral portions of the upper plate 32 abut against the diaphragm 16 to clamp the diaphragm 16 between the lower plate 30 and the upper plate 32.

When high frequency vibrations are transmitted by the bolt 2 to the boss 1, the boss 1 moves towards (or away from) the partition 6 and the resilient spring 9 flexes and reduces (increases) the volume of the working chamber 13. This is similar to the operation of the embodiment of Figure 1. The pressure of the hydraulic fluid in the working chamber 13 passes through holes 35 in the upper perforated plate 32 and forces the diaphragm 16 towards (or away from) the lower perforated plate 30. As the air between the diaphragm 16 and the lower perforated plate 30 is in communication with the air in the pocket 18 through holes 36, the movement of the diaphragm compresses (expands) the air in the pocket 18 and so there is little resistance to the oscillations. For larger amplitude oscillations, the diaphragm 16 is pressed against the lower perforated plate 30 (or the upper perforated plate 32) and continued movement of the boss 1 is possible only by movement of fluid from the chamber 13 to the reservoir 14 (or vice versa) through the aperture 15. At low frequencies, the main damping effect is given by the movement of the liquid through the passage 15.

The purpose of the lower perforated plate 30 is to limit the oscillations of the diaphragm 16 in the downward direction but permit the diaphragm 16 to influence the air in the pocket 18. In an alternative arrangement, a plurality of projections may be provided on the lower surface 37 of the recess 26 which extend sufficiently far from that surface to limit the movement of the diaphragm if the diaphragm contacts their upper surfaces. The pocket 18 is then formed by the space between such projections.

The mounting may be subject to significant fluctuations in ambient temperature, e.g. when used in a motor vehicle as an engine mounting there would be a significant temperature difference in the mounting when the engine has been running for a long time as compared to the temperature when the engine is not in use. Such temperature variations would cause expansion or contraction of the air in the space 18 and would bias the diaphragm 16 either towards the upper perforated plate 32 or towards the lower perforated plate 30. As explained previously, this biasing of the diaphragm 16 would affect the performance of the mounting as it would limit the possible movement of the diaphragm in one of its directions of movement. To overcome this problem a bleed orifice 38 is provided in the plate 24 extending from the recess 28, through the flange 25 and communicating with an opening 39 in the part of the bracket 11 which extends over the rim of the cup 4. This bleed orifice 38 is sufficiently narrow to prevent significant movement of air during vibrations of the diaphragm 16 but permits compensation for expansion or contraction of the air in pocket 18. The second embodiment is therefore preferred because it permits such compensation.

The dimensions of the bleed orifice 38 may be selected to give the desired characteristic to the gas spring formed by the pocket 18. However, in order for the bleed orifice 38 to restrict gas movement when vibrations are applied to the mounting device, it is necessary that the maximum effective aperture of the bleed orifice must be related to its length. It has been found that satisfactory results are achieved if the length of the bleed orifice 38 is at least five times its effective diameter.

Another parameter that is important in satisfactory operation of the mounting device is the ratio of the area of the diaphragm 16 to the effective area of the resilient spring 9, i.e. the area of a piston for which movement over a given distance would cause a pressure change in the working chamber 13 equivalent to the pressure change produced by a movement of the boss 1 over the same distance. If the area of the diaphragm 16 is less than the effective area of the resilient spring 9, a given movement of the boss 1 appears as a magnified movement of the diaphragm 16. This magnification effect is important because it is a factor in determining the amplitude of vibration at which the diaphragm 16 is forced against the lower or upper perforated plates 30 and 32, respectively. It has been found that the ratio of the area of the diaphragm 16 to the effective area of the resilient spring 9 is desirably about 1:5.

It has been discovered by the inventor of the present invention that at high frequencies a resonance develops in the working chamber. There is no transmission of pressure vibrations through the passage 15 and the interaction between the resilient spring 9 and the liquid in the working chamber 13 causes a resonance to develop. The working chamber 13 thus acts as a closed space. The resonance usually occurs between about 100 and 200 Hz, more particularly between 130 and 150 Hz and may be such as to negate the beneficial effects of the gas pocket 18. To overcome this it is possible to select an effective aperture for the bleed orifice which smooths out this resonance.

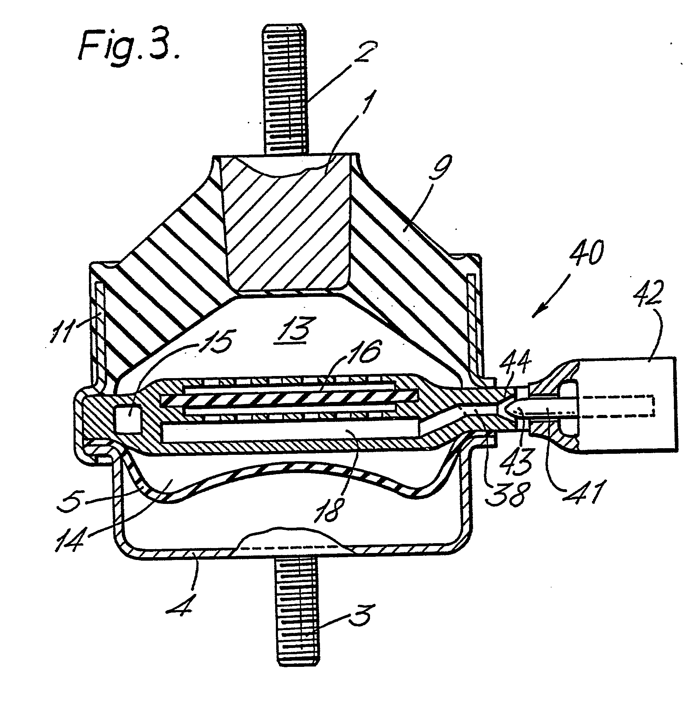

However, in some case it is desirable that the response may be changed in dependence upon frequencies of the vibrations in a way that would require different effective apertures of bleed orifice. To achieve this the present invention proposes that means be provided for controlling gas flow through the orifice in dependence on a frequency signal, thereby to control the effective aperture of the bleed orifice. Referring to Figure 3, the bleed orifice 38, terminates in a valve 39. Apart from this, this embodiment is generally similar to the arrangement shown in Figure 2 and corresponding parts are indicated by the same reference numerals.

The valve 39 comprises an obdurator element 40. the position of which is controlled by an actuator 41. The obdurator element 40 terminates in a tapered portion, the taper of which ccorresponds generally to the taper of the outlet of the bleed orifice 38. The actuator 41 controls the position of the obdurator element 40 to control the gap between the tapered portion and the outlet. Since it is this gap which determines the effective aperture of the bleed orifice 38, its diameter over the major part of its length is not as critical as is the second embodiment and in general will be of greater diameter.

The actuator 41 may be controlled by a frequency signal derived e.g. from the engine of a vehicle in which the device is mounted, thus enabling the frequency response of the device to be adjusted in response to the dominant frequency of the oscillations occurring between the anchor points of the device.

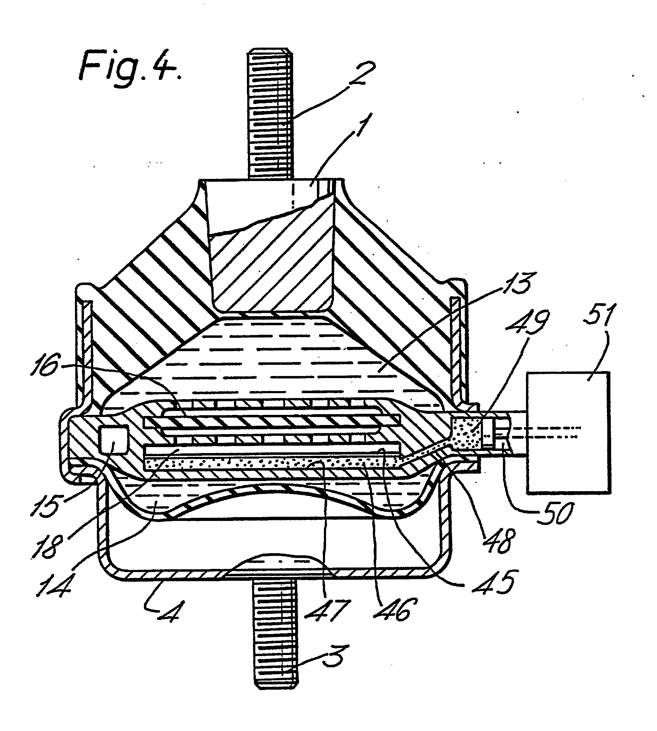

An additional way to control the high frequency response is to control the volume of the gas pocket. The arrangement shown in Figure 4 exemplifies one way of achieving volume control. This mounting device is generally similar to that of Figure 2, except that the gas pocket 18 is defined between the diaphragm 16 and a flexible membrane 42. There is a space 43 between the flexible membrane 42 and the inner surface 44 of the partition 6, and this space 43 is filled with a hydraulic fluid. In other respects the mounting device may be similar to the second embodiment shown in Figure 4, and corresponding parts are indicated by the same reference numerals.

A passageway 45 leads from the space 43 to a chamber 46 containing a piston 47. The position of the piston 47 in the chamber 46 is controlled by an actuator 48. Movement of the piston 47 is transmitted via the hydraulic fluid to the membrane 42 which flexes so as to increase or decrease the volume of the gas pocket 18. By changing the volume of the gas pocket 18, the spring effect of the gas varies, thereby varying the characteristics of the mounting device. The high frequency vibration is absorbed within the gas pocket 18 because the hydraulic fluid is relatively incompressible so that the membrane 42 acts as a rigid barrier to vibration of the gas in the pocket 18.

The gas pocket 18 then also has a bleed orifice with a variable effective aperture, as in the third embodiment.

The control of the effective aperture of the bleed orifice in the third embodiment, or the control of the effective volume of the gas pocket in the fourth embodiment, enable the characteristics of the spring effect of the gas pocket to be "tuned" to smooth out high-frequency resonances. Indeed, it is possible to "tune" the response so that the total assembly has an uneven response with a decrease in stiffness at a frequency corresponding to the resonant frequency of the vehicle as a whole (usually due to the body of the vehicle).

In all of the arrangements discussed above, the deformable wall connecting the two anchor points is a resilient spring. This is also true of the prior art constructions described previously. However, the inventor of the present invention has discovered that, because high frequency vibrations may be absorbed by a gas spring, an alternative construction is possible in which the anchor points are connected by a deformable, but inelastic element. There is then little resistance to relative movement of the anchor points except due to the gas spring and fluid damper effects of the mounting device.

The fact that there is little resistance to relative movement is important in the high frequency behaviour of the mounting device. Normally, the high frequency response will be affected greatly by the response of the resilient spring. If, however, the connection of the two anchor points is flexible but inelastic, the high frequency response will be determined entirely by the movement of the diaphragm. At lower frequencies, the fluid moves through the passage in the partition giving a large damping effect.

To maintain pressure in the working chamber, and hence prevent the device collapsing under load, it is necessary that a resilient spring be provided as one wall of the compensation chamber.

It is desirable that the diaphragm and gas pocket are designed to have a pressure-displacement characteristic with a first region, corresponding to very small deflections, in which the deflection produced by a given change in pressure is small, a second region in which the deflection with a given change of pressure is large and a third region corresponding to large deflections, in which again the deflection for a given change in pressure is small. The mounting device is then operated with a static deflection at approximately the mid-point of the second region. Thus, for small amplitude oscillations the partition will be deflected very easily so that small amplitude oscillations are absorbed within the mount, with little resistance. However, at large amplitude oscillations the deflection is sufficiently large to cause the diaphragm and gas pocket to operate in the first or third region of its characteristic and further changes in volume of the working chamber can only be achieved by a fluid movement of liquid to or from the reservoir. Thus, there is an increasing amount of damping.

Of course, the characteristic of the diaphragm and gas pocket may have a step-like characteristic with increasing pressure causing no deflection until a first pressure at which the characteristic changes to one of shallow slope where small changes in pressure cause a very large deflection until a predetermined deflection is reached, beyond which no deflection is possible. The range of possible deflections entirely within the slightly sloping region should be sufficient to absorb small amplitude vibrations (corresponding to the normal running vibrations of the engine when the mounting device is used as an engine mounting).

Thus the present invention provides a hydraulically damped mounting device with an improved high frequency response. The mounting device may be considered as the parallel connection of a spring (formed by the gas pocket) and a damper (formed by the passage and the reservoir). The use of an elongate passage is equivalent to a mass on the damper. The "softness" of the spring is determined by the design of the gas pocket.

**Claims**

1. A hydraulically damped mounting device having two anchor points (3,2) connected by a first deformable wall (9); a working chamber (13) enclosed between the first deformable wall (9) and a rigid partition (6) rigidly associated with a first one (3) of the anchor points, the working chamber (13) containing liquid; a compensation chamber (14) for the liquid, the compensation chamber (14) being at least partially bounded by a second deformable wall (5), a part of which is freely movable in dependence upon liquid pressure changes in the compensation chamber (14); a passage (15) between the chambers (13,14) to allow fluid communication of the liquid between them; and a flexible diaphragm (16) on the partition in direct contact with the liquid in the working chamber (13), the flexible diaphragm (16) acting as a barrier between the liquid and a gas chamber (18); characterised in that: the gas pocket has a bleed orifice (38) having a means (39) for controlling gas flow in the bleed orifice (38) in dependence on a signal applied to the control means (39), the signal being dependent on the frequency of the vibrations to be damped.

2. A hydraulically damped mounting device according to claim 1, wherein the first deformable wall (9) includes an elastomeric spring and the second deformable wall (5) includes a flexible bellows.

3. A hydraulically damped mounting device according to claim 1, wherein the first deformable wall includes a flexible bellows and the second deformable wall includes an elastomeric spring.

4. A hydraulically damped mounting device according to any one of the preceding claims, wherein the volume of the gas chamber (18) is variable independently of the liquid pressure.

**Patentansprüche**

1. Hydraulisch gedämpfte Lagerungsvorrichtung mit zwei Verankerungspunkten (3, 2), die mit einer ersten verformbaren Wand (9) verbunden sind; einer Arbeitskammer (13), die zwischen der ersten verformbaren Wand (9) und einer mit einem ersten Verankerungspunkt (3) starr verbundenen Trennwand (6) eingeschlossen ist, wobei die Arbeitskammer (13) eine Flüssigkeit enthält; einer Ausgleichskammer (14) für die Flüssigkeit, wobei die Ausgleichskammer (14) zumindest teilweise von einer zweiten verformbaren Wand (5) begrenzt ist, von der ein Teil infolge von Schwankungen des Flüssigkeitsdruckes in der Ausgleichskammer (14) frei beweglich ist; einem Kanal (15) zwischen den Kammern (13, 14), der einen Flüssigkeitsaustausch zwischen diesen ermöglicht; und einer flexiblen Membran (16) auf der Trennwand, die mit der Flüssigkeit in der Ausgleichskammer (13) in unmittelbarer Berührung steht, wobei die flexible Membran als Sperre zwischen der Flüssigkeit und einer Gaskammer (18) wirkt; dadurch gekennzeichnet, daß die Gaskammer eine Abflußöffnung (38) hat, die eine Einrichtung (39) aufweist, um die Gasströmung in der Abflußöffnung (38) in Abhängigkeit von einem der Steuereinrichtung (39) zugeführten Signal zu steuern, wobei das Signal von der Frequenz der zu dämpfenden Schwingungen abhängig ist.

2. Hydraulisch gedämpfte Lagerungsvorrichtung nach Anspruch 1, wobei die erste verformbare Wand (9) eine elastomere Feder umfaßt und die zweite verformbare Wand einen Faltenbalg umfaßt.

3. Hydraulisch gedämpfte Lagerungsvorrichtung nach Anspruch 1, wobei die erste verformbare Wand einen Faltenbalg umfaßt und die zweite verformbare Wand eine elastomere Feder umfaßt.

4. Hydraulisch gedämpfte Lagerungsvorrichtung nach einem der vorhergehenden Ansprüche, wobei das Volumen der Gaskammer (18) unabhängig vom Flüssigkeitsdruck veränderlich ist.

**Revendications**

1. Dispositif à amortissement hydraulique ayant deux points d'ancrage (3, 2) connectés par une première paroi déformable (9); une chambre de travail (13) enfermée entre la première paroi déformable (9) et une séparation rigide (6) rigidement associée à un premier (3) des points d'ancrage, la chambre de travail (13) contenant du liquide; une chambre de compensation (14) pour le liquide, la chambre de compensation (14) étant au moins partiellement délimitée par une seconde paroi déformable (5), dont une partie est librement mobile selon des changements de pression du liquide dans la chambre de compensation (14); un passage (15) entre les chambres (13, 14) pour permettre la communication de fluide du liquide entre elles; et une membrane flexible (16) sur la séparation en contact direct avec le liquide dans la chambre de travail (13), la membrane flexible (16) servant de barrière entre le liquide et une chambre à gaz (18); caractérisé en ce que la poche à gaz a un orifice de purge (38) ayant un moyen (39) pour contrôler l'écoulement de gaz dans l'orifice de purge (38) selon un signal appliqué au moyen e contrôle (39), le signal dépendant de la fréquence des vibrations à amortir.

2. Dispositif de montage à amortissement hydraulique selon la revendication 1, où la première paroi déformable (9) comprend un ressort en élastomère et la seconde paroi déformable (5) comprend un soufflet flexible.

3. Dispositif de montage à amortissement hydraulique selon la revendication 1, où la première paroi déformable comprend un soufflet flexible et la seconde paroi déformable comprend un ressort en élastomère.

4. Dispositif de montage à amortissement hydraulique selon l'une quelconque des revendications précédentes, où le volume de la chambre à gaz (18) est variable indépendamment de la pression du liquide.

# Fig.1.

Fig. 2.

EP 0 262 544 B1

Fig.3.

Fig.4.